# EUROPEAN PATENT APPLICATION

(11) **EP 4 786 146 A2**
(43) Date of publication of application: **05.08.2026**
(21) Application number: 26185101.8
(22) Date of filing: 15.06.2026
(51) Int. Cl.: B29C 64/124, B01F 31/00, B29C 64/227, B29C 64/259, B29C 64/314, B29C 64/321, B29C 64/393, B33Y 30/00, B33Y 40/10, B33Y 50/02

(54) **PRINTING MATERIAL UNIFORMITY ADJUSTMENT METHOD, PRINTING DEVICE AND ELECTRONIC DEVICE**

(30) Priority: 31.07.2025 CN 202511073917; 31.12.2025 CN 202512059396
(71) Applicant: Shining 3D Tech Co., Ltd., Hangzhou, Zhejiang 311258 (CN)
(72) Inventor: TAALAB, ELIAS, Hangzhou, 311258 (CN); Zhao, Xiaobo, Hangzhou, 311258 (CN); Chen, Da, Hangzhou, 311258 (CN); He, Junlin, Hangzhou, 311258 (CN)
(74) Representative: Metida

(57) **Abstract**

The present application provides a printing material uniformity adjustment method and a device. The method is applied to a printing device. The printing device is equipped with a forming module (100), and the forming module (100) includes a platform assembly (120). The method includes: driving the platform assembly (120) to stir printing material by moving. The present application achieves automated, efficient, and uniform stirring of the photocurable printing material without requiring an extra stirring component. The platform assembly (120) can serve as a stirrer in addition to serving as a forming platform (121), reducing product cost, minimizing human intervention, and improving operational convenience.

## Description

### TECHNICAL FIELD

The present application relates to a field of 3D printing technology, and in particular, to a printing material uniformity adjustment method and a device.

### BACKGROUND

Currently, for pre-printing resin liquid stirring, the main solution is to remind users to perform the stirring operation manually. Pre-printing stirring operation is particularly important for high-viscosity resin liquids. High-viscosity resin, if left standing for an extended period, can cause sedimentation of certain substances within the resin. If it is not fully stirred before printing and is printed directly, it will affect the surface finish and precision of the printed product. In some scenarios, accessories like stirrers can be used to assist resin stirring instead of manual operation. However, whether it is manual stirring or using accessories to assist in resin stirring, both increase the user's operational cost.

### SUMMARY

The main objective of the embodiments of the present application is to provide a printing material uniformity adjustment method and a device, achieving automated, efficient, and uniform stirring of photocurable printing material without requiring an extra stirring component, reducing product cost, minimizing human intervention, and improving operational convenience.

In a first aspect, an embodiment of the present application provides a printing material uniformity adjustment method, applied to a printing device, the printing device is equipped with a forming module, the forming module includes a platform assembly, and the method includes: driving the platform assembly to move so as to stir printing material.

In a second aspect, an embodiment of the present application provides a printing device, the printing device includes a forming module including a platform assembly, and the platform assembly is configured for stirring printing material by moving.

In a third aspect, an embodiment of the present application provides an electronic device, including: at least one processor; and a memory communicatively connected to the at least one processor; wherein the memory stores instructions executable by the at least one processor, and the instructions are executed by the at least one processor to cause the electronic device to execute the method according to any of the aforementioned aspects.

The printing material uniformity adjustment method and device provided by the embodiments of the present application, wherein the printing device is equipped with a forming module, the forming module includes a platform assembly. By moving the platform assembly of the printing device, automated, efficient, and uniform stirring of the photocurable printing material is achieved without requiring an extra stirring component, thereby reducing product cost, minimizing human intervention, and improving operational convenience.

### BRIEF DESCRIPTION OF THE DRAWINGS

The accompanying drawings incorporated herein constitute a part of the present specification, illustrate embodiments consistent with the present application, and together with the specification serve to explain the principles of the present application. It is evident that the drawings in the following description are some embodiments of the present invention. For those of ordinary skill in the art, other drawings can also be obtained from these drawings without creative effort.
FIG. 1 is a structural diagram of an electronic device provided by an embodiment of the present application.
FIG. 2 is a schematic diagram of an application scenario of a printing material uniformity adjustment system provided by an embodiment of the present application.
FIG. 3A is a structural diagram of a printing device provided by an embodiment of the present application.
FIG. 3B is a schematic diagram of a forming module provided by an embodiment of the present application.
FIG. 4 is a flowchart of a printing material uniformity adjustment method provided by an embodiment of the present application.
FIG. 5 is a flowchart of a printing material uniformity adjustment method provided by an embodiment of the present application.
FIG. 6 is a front view of a printing device before stirring provided by an embodiment of the present application.
FIG. 7 is a cross-sectional view of a printing device before stirring provided by an embodiment of the present application.
FIG. 8 is a front view of a printing device during stirring provided by an embodiment of the present application.
FIG. 9 is a cross-sectional view of a printing device during stirring provided by an embodiment of the present application.
FIG. 10 is a structural diagram of a printing material uniformity adjustment device provided by an embodiment of the present application.

Reference numerals: 100-forming module, 110-outer cylinder, 111-light-transmitting assembly, 120-platform assembly, 121-forming platform, 122-top cover, 123-inner cylinder body, 124-accommodation cavity, 130-cover plate, 140-forming cavity, 300-inflation structure, 301-air pump, 302-air outlet.

Through the aforementioned drawings, explicit embodiments of the present application have been shown, which will be described in more detail later. These drawings and textual descriptions are not intended to limit the scope of the concept of the present application in any way, but rather to illustrate the concept of the present application to those skilled in the art by referring to specific embodiments.

### DETAILED DESCRIPTION

Exemplary embodiments will be described in detail here, examples of which are shown in the accompanying drawings. When the following description refers to the drawings, unless otherwise indicated, the same numbers in different drawings represent the same or similar elements. The implementation manners described in the following exemplary embodiments do not represent all implementation manners consistent with the present application.

The term "and/or" herein is used to describe the association between associated objects, specifically indicating that three relationships may exist, for example, A and/or B may indicate: A exists alone, A and B coexist, or B exists alone.

The printing material uniformity adjustment method of the embodiments of the present application can be applied to any field scenario that requires stirring printing material.

Currently, most photocurable three-dimensional (3D) printing devices use a resin tank and a printing platform cooperating layer by layer to print 3D models. Considering that many resins have high viscosity, traditional methods for printing high-viscosity resins have low success rates and insufficient stability due to slow resin backflow. Moreover, some printing materials require thorough stirring before printing. For example, high-viscosity resin, if left standing for an extended period, can cause sedimentation of certain substances within the resin. If it is not fully stirred before printing and is printed directly, it will affect the surface finish and precision of the printed product. Therefore, pre-printing stirring operation is particularly important for high-viscosity printing materials.

The stirring operation in traditional 3D printing methods is manual stirring before printing. In some scenarios, accessories like stirrers can be used to assist resin stirring instead of manual operation. However, whether it's manual stirring or using accessories for assisted resin stirring, both increase the user's operational cost.

To solve at least one of the above problems, an embodiment of the present application provides a printing material uniformity adjustment solution. The printing device is equipped with a forming module, and the forming module includes a platform assembly. The platform assembly serves not only as a forming platform but also as a stirrer. By moving the platform assembly of the printing device itself, automated, efficient, and uniform stirring of the photocurable printing material is achieved without requiring an extra stirring component, reducing product cost, minimizing human intervention, and improving operational convenience.

The following describes in detail some implementation manners of the present application in conjunction with the accompanying drawings. The embodiments and features of the embodiments described below can be combined with each other provided that the embodiments do not conflict. In addition, the timing of steps in the following method embodiments is merely an example and is not strictly limited.

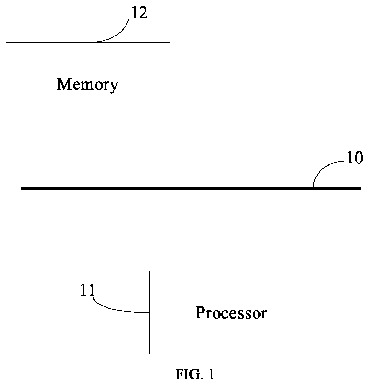

As shown in FIG. 1, the embodiment provides an electronic device 1, and the electronic device includes at least one processor 11 and a memory 12. FIG. 1 takes one processor as an example. The processor 11 and the memory 12 are connected through a bus 10. The memory 12 stores instructions executable by the processor 11. The instructions are executed by the processor 11 to enable the electronic device 1 to execute all or part of the process of the method in any of the following embodiments, thereby achieving automated, efficient, and uniform stirring of the photocurable printing material without requiring an extra stirring component, reducing product cost, minimizing human intervention, and improving operational convenience.

In one embodiment, the electronic device 1 can be a 3D printing device, or a mobile phone, a tablet computer, a laptop, a desktop computer, or a large-scale computing system composed of multiple computers connected to the printing device.

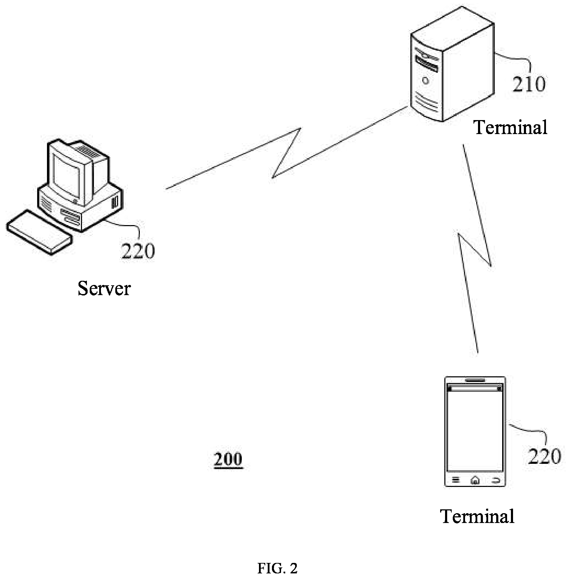

FIG. 2 is a schematic diagram of an application scenario 200 of a printing material uniformity adjustment system provided by an embodiment of the present application. As shown in FIG. 2, the system includes a server 210 and a terminal 220.

The server 210 can be a data platform providing printing material uniformity adjustment services, such as an intelligent printing management service platform. In actual scenarios, the intelligent printing management service platform may have multiple servers 210. FIG. 2 takes one server 210 as an example.

The terminal 220 can be a 3D printing device used by a user to log in to the intelligent printing management service platform, or a computer, mobile phone, tablet, etc. connected to the printing device. There can also be multiple terminals 220. FIG. 2 illustrates with two terminals 220 as an example.

The terminal 220 and the server 210 can perform printing material stirring control over the Internet, enabling the terminal 220 to access data on the server 210. The aforementioned terminal 220 and/or server 210 can be implemented by the electronic device 1.

The printing material uniformity adjustment solution of the embodiments of the present application can be deployed on the server 210, or deployed on the terminal 220, or partially deployed on the server 210 and partially on the terminal 220. Actual scenarios can be chosen based on actual needs, which is not limited in the embodiment.

When the printing material uniformity adjustment solution is deployed entirely or partially on the server 210, a calling interface can be opened to the terminal 220 to provide algorithm support to the terminal 220.

The method provided by the embodiments of the present application can be implemented by the electronic device 1 executing corresponding software code, and can be realized by interacting with the server. Wherein, the electronic device 1 can be a local terminal device. When the method runs on the server, the method can be implemented and executed based on a cloud interaction system, wherein the cloud interaction system includes a server and client devices.

In a possible implementation, the method provided by the embodiments of the present application provides a graphical user interface through a terminal device, wherein the terminal device can be the aforementioned local terminal device or the client device in the aforementioned cloud interaction system.

An embodiment of the present application provides a printing device. The printing device includes a forming module, and the forming module includes a platform assembly, and the platform assembly is configured for moving so as to stir printing material.

Optionally, the forming module forms a sealed accommodation cavity, the forming module includes a light-transmitting assembly disposed on one side of the accommodation cavity, the platform assembly includes a forming platform arranged opposite the light-transmitting assembly, the accommodation cavity is configured for accommodating printing material, and the forming platform is capable of moving towards or away from the light-transmitting assembly. The platform assembly includes a pressure-bearing surface facing the accommodation cavity, and the pressure-bearing surface intersects with, preferably is perpendicular to, the movement direction of the platform assembly.

Optionally, the printing device includes a limiting mechanism, the limiting mechanism includes a driving component and a limiting part, and the limiting part is in contact and cooperation with the platform assembly.

Optionally, the printing device includes a limiting mechanism, the limiting mechanism includes a driving component and a limiting part, and the limiting part is fixedly connected to the platform assembly.

Optionally, the limiting part is equipped with an inflation structure, and the inflation structure communicates with the accommodation cavity when the limiting part and the platform assembly are in contact and cooperation.

Optionally, the forming module includes an outer cylinder, the outer cylinder is sleeved outside the platform assembly, and the platform assembly can perform reciprocating motion along an axial direction of the outer cylinder.

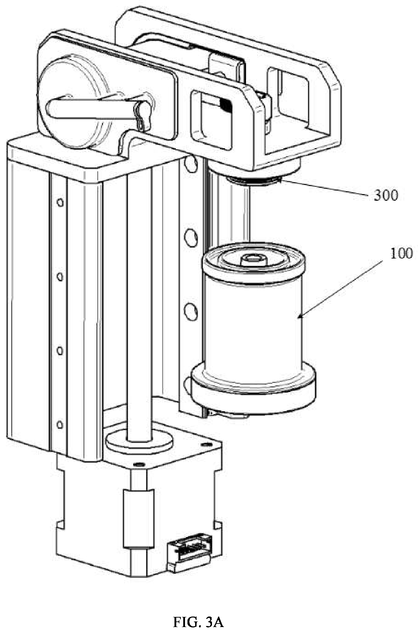

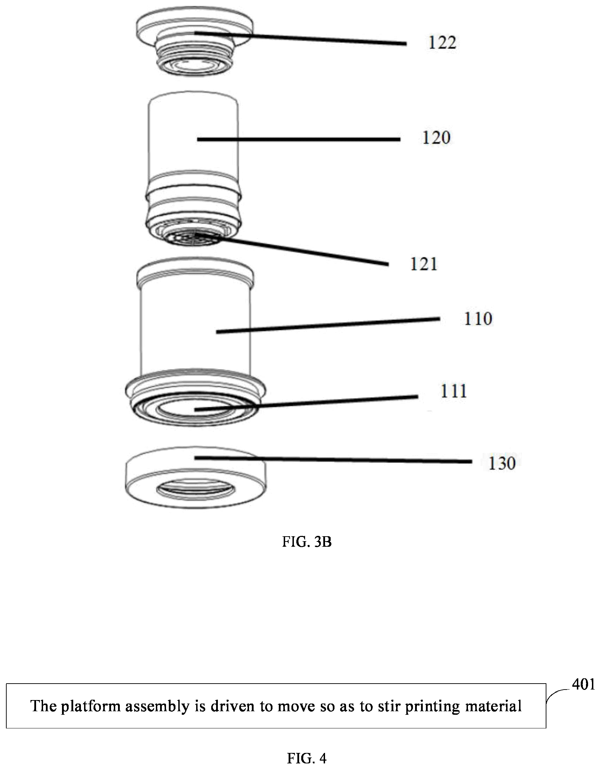

Optionally, the printing device may also include a controller, which can control a movement process of the platform assembly based on preset parameters. Please refer to FIG. 3A, which illustrates a printing device provided by an embodiment of the present application. The printing device includes a forming module 100, an inflation structure 300, and a controller, wherein: as shown in FIG. 3B, which is a schematic diagram of the forming module 100 of an embodiment of the present application, the forming module 100 includes an outer cylinder 110 and a platform assembly 120. Along a first direction, one end of the outer cylinder 110 is equipped with a light-transmitting assembly 111, and the platform assembly 120 includes a forming platform 121 arranged opposite the light-transmitting assembly 111. At least a part of the platform assembly 120 is slidably and sealingly connected to the other end of the outer cylinder 110. A forming cavity 140 is formed between the platform assembly 120 and the light-transmitting assembly 111. The forming module 100 forms a sealed accommodation cavity 124, the accommodation cavity 124 is configured for accommodating printing material, and the accommodation cavity 124 communicates with the forming cavity 140. The forming platform 121 is capable of moving towards or away from the light-transmitting assembly 111.

An inner cylinder body 123 of the platform assembly 120 can be installed inside the outer cylinder 110. A bottom of the platform assembly 120 can be equipped with a circle of spaced hollows, allowing printing material inside the accommodation cavity 124 to flow into the forming cavity 140. The printing material can be, for example, photocurable resin liquid. Two circles of sealing boundaries can be provided on the periphery of the inner cylinder body 123 of the platform assembly 120 for sealing treatment. A top of the platform assembly 120 can be equipped with a top cover 122 and a sealing sleeve for sealing an air inlet. During a printing process, the resin liquid can be formed and cured on the forming platform 121. The light-transmitting assembly 111 can be installed at a bottom of the outer cylinder 110 and fixed with a film cover plate 130. The air inlet of the installed forming module 100 matches an air outlet 302 of the inflation structure 300, and the accommodation cavity 124 is filled with photocurable resin required for printing.

Optionally, the platform assembly 120 is also equipped with a ventilation port communicating with the accommodation cavity 124. The air pressure in the accommodation cavity 124 can be controlled through the ventilation port, such as injecting gas into the sealed accommodation cavity 124 to increase the air pressure inside, causing the platform assembly 120 to move upward (i.e., away from the light-transmitting assembly 111) when the air pressure inside the accommodation cavity 124 is greater than the external air pressure. For example, pressure is released from the sealed accommodation cavity 124 to avoid continuous high pressure in the accommodation cavity, reducing the resistance encountered by the platform assembly when moving towards the light-transmitting assembly. In the embodiment, a downward movement of the platform assembly 120 is driven by the limiting part.

In one embodiment, the ventilation port is located above the liquid level of the printing material, and the gas pressure acts on the liquid level of the printing material, thereby squeezing the printing material. The ventilation port can be located on the top of the platform assembly 120, or can be located above the limited liquid level of the platform assembly 120, with the limited liquid level not exceeding a maximum liquid level that the platform assembly 120 can accommodate for the printing material.

The controller is connected to the driving component, and the controller is configured to execute the method of any of the following embodiments to automatically complete the stirring process of the printing material inside the forming module 100. The controller here can be integrated into the printing device or can be implemented by an electronic device independent of the printing device.

As shown in FIG. 4, an embodiment of the present application provides a printing material uniformity adjustment method. The method can be executed by the electronic device 1 shown in FIG. 1 and can be applied to the application scenario shown in FIGS 2-3B to achieve automated, efficient, and uniform stirring of the photocurable printing material, reducing human intervention and improving operational convenience. The embodiment takes the printing device as the execution terminal. The printing device is equipped with a forming module, and the forming module includes a platform assembly. The method includes following steps.

Step 401: the platform assembly is driven to move so as to stir printing material.

In the embodiment of the present application, the platform assembly is used to form printed objects during the printing process. Before printing, the platform assembly can first be driven to move, preferably reciprocating motion, to achieve automated, efficient, and uniform stirring of the photocurable printing material, without the need to add an extra stirring component, reducing product cost, minimizing human intervention, and improving operational convenience. After the printing material is stirred, the printing process can directly start, controlling the forming platform to perform corresponding movements based on the printing program to form the printed objects.

In one embodiment, the forming module forms a sealed accommodation cavity, and the forming module includes a light-transmitting assembly disposed on one side of the accommodation cavity. The platform assembly includes a forming platform arranged opposite the light-transmitting assembly. The accommodation cavity is configured for accommodating the printing material, the forming platform is capable of moving towards or away from the light-transmitting assembly, and the method includes: alternately performing an inflation operation and a pressure relief operation on the accommodation cavity.

In the embodiment, the inflation operation can be inflating the accommodation cavity to a first preset pressure. The first preset pressure is usually greater than an ambient pressure, creating a pressure difference between the inside and outside of the accommodation cavity, with the internal pressure of the accommodation cavity being greater than the external pressure. The pressure relief operation is releasing pressure from the accommodation cavity to a second preset pressure. The second preset pressure can be equal to the external ambient pressure or greater than the ambient pressure.

In one embodiment, step 401 can specifically include: driving the platform assembly to move away from the light-transmitting assembly and inflating the accommodation cavity; driving the platform assembly to move towards the light-transmitting assembly and relieving pressure in the accommodation cavity, so as to drive the platform assembly to move, thereby driving the printing material to move and achieving stirring of the printing material.

In one embodiment, step 401 can specifically include: driving the platform assembly to move away from the light-transmitting assembly to a first preset position; driving the platform assembly to move towards the light-transmitting assembly to a second preset position, thereby achieving the movement of the platform assembly, and driving the printing material to move and achieving stirring of the printing material. The first preset position and the second preset position precisely control the movement amplitude of the platform assembly, avoiding excessive or insufficient movement amplitude and improving stirring effectiveness. Of course, a movement distance of the platform assembly can also be limited to determine the movement amplitude of the platform assembly. Preferably, when the platform assembly is at the first preset position, all printing material is located between the platform assembly and the light-transmitting assembly; when the platform assembly is at the second preset position, the platform assembly is in contact with the light-transmitting assembly, with the light-transmitting assembly supported and tensioned horizontally in the printing device. The above arrangement optimizes stirring effectiveness and efficiency.

In one embodiment, the printing device includes a limiting mechanism, and the limiting mechanism includes a driving component and a limiting part. The limiting part is in contact and cooperation with the platform assembly, and driving the platform assembly to move away from the light-transmitting assembly includes: driving the platform assembly to move away from the light-transmitting assembly by a pneumatic driving mode, including: controlling the air pressure in the accommodation cavity to increase so that the air pressure in the accommodation cavity is higher than the ambient air pressure, thereby forming a driving force on the platform assembly away from the light-transmitting assembly; controlling the driving component to cause the limiting part to move away from the light-transmitting assembly.

In the embodiment, the movement of the platform assembly can be driven through a pneumatic driving mode. The driving component of the limiting mechanism controls the limiting part to be in contact and cooperation with the platform assembly. The pneumatic driving mode is used to make the air pressure in the accommodation cavity higher than the ambient air pressure. The upward driving force generated by the increased air pressure pushes the platform assembly to move away from the light-transmitting assembly, while the limiting part moves synchronously in the same direction to provide rigid axial constraint, limiting the movement distance of the platform assembly, ensuring the movement amplitude of the platform assembly is within the controlled range, and achieving precise stirring control. By replacing manual stirring through fully automated pneumatic-mechanical linkage, operational time cost is significantly reduced. It should be noted that if the limiting part only provides the final movement distance/position of the platform assembly, it can also move before the platform assembly moves away from the light-transmitting assembly; and synchronization is not necessary.

In one embodiment, the limiting part is equipped with an inflation structure, the inflation structure communicates with the accommodation cavity when the limiting part and the platform assembly are in contact and cooperation, and the method includes: the movement speed of the limiting part is synchronized with the movement speed of the platform assembly.

In the embodiment, by integrating the inflation structure into the limiting part, and when the limiting part and the platform assembly are in contact and cooperating, the inflation structure communicates with the accommodation cavity, so that the limiting part and the platform assembly maintain contact and inflation coupling. When the inflation structure injects a stable airflow into the accommodation cavity, causing the air pressure in the accommodation cavity to be higher than the ambient air pressure, thereby forming a driving force on the platform assembly away from the light-transmitting assembly, during the process of the platform assembly moving away from the light-transmitting assembly, the movement speed of the limiting part is synchronized with the movement speed of the platform assembly, ensuring continuous contact and inflation.

In one embodiment, the printing device includes a limiting mechanism, the limiting mechanism includes a driving component and a limiting part, the limiting part is fixedly connected to the platform assembly, and driving the platform assembly to move away from the light-transmitting assembly is achieved by any one of the following modes.

Pneumatic driving mode: controlling the air pressure in the accommodation cavity to increase so that the air pressure in the accommodation cavity is higher than the ambient air pressure, thereby forming the driving force on the platform assembly away from the light-transmitting assembly; controlling the driving component to cause the limiting part to move away from the light-transmitting assembly. In the embodiment, the driving force formed by air pressure is not less than the minimum force required to move the platform assembly away from the light-transmitting assembly.

Mechanical and pneumatic combined driving mode: controlling the driving component to cause the limiting part to move away from the light-transmitting assembly, thereby driving the platform assembly to move; controlling the air pressure in the accommodation cavity to increase so that the air pressure in the accommodation cavity is higher than the ambient air pressure, thereby forming a driving force on the platform assembly away from the light-transmitting assembly. In the embodiment, a sum of the driving force exerted by the limiting part on the platform assembly and the driving force formed by air pressure is not less than a minimum force required to move the platform assembly away from the light-transmitting assembly.

Mechanical driving mode: controlling the driving component to cause the limiting part to move away from the light-transmitting assembly, thereby driving the platform assembly to move. In the embodiment, the driving force exerted by the limiting part on the platform assembly is not less than the minimum force required to move the platform assembly away from the light-transmitting assembly.

In the embodiment, by fixedly connecting the limiting part to the platform assembly and configuring three optional modes: pneumatic driving mode, mechanical and pneumatic combined driving mode, or pure mechanical driving mode, a highly adaptable displacement control mechanism is achieved. In the pneumatic driving mode, the air pressure difference between the accommodation cavity and the external environment forms an upward driving force, causing the platform assembly to move away from the light-transmitting assembly, and the driving component is controlled to drive the limiting part to move away from the light-transmitting assembly synchronously; in the mechanical and pneumatic combined driving mode, the limiting part exerts a mechanical driving force on the platform assembly away from the light-transmitting assembly, while the air pressure in the accommodation cavity can be made higher than the ambient air pressure, and the pressure difference forms the pneumatic driving force on the platform assembly away from the light-transmitting assembly; the platform assembly moves away from the light-transmitting assembly under the combined driving of the mechanical driving force and the pneumatic driving force; in the pure mechanical driving mode, the limiting part moves away from the light-transmitting assembly, driving the platform assembly to move. All three modes ensure axial stability through the fixed connection structure, allowing high-viscosity resin to be evenly mixed under directional pressure/mechanical disturbance, achieving a fully automated stirring process.

In practical applications, a cantilever (i.e., the limiting part) of the printing device can be controlled to move away from the light-transmitting assembly to a target position, to precisely control the target position of the forming platform moving away from the light-transmitting assembly. Alternatively, the cantilever of the printing device and the forming platform can be controlled to move synchronously to the target position.

Optionally, the mechanical driving mode can also be used, i.e., the forming platform performs reciprocating motion inside the material tank, thereby driving the printing material to move and achieving automated stirring. In the embodiment, the forming module may or may not be equipped with an accommodation cavity.

In one embodiment, driving the platform assembly to move away from the light-transmitting assembly includes: controlling the driving component to cause the limiting part to move towards the light-transmitting assembly, enabling the limiting part to accurately limit the displacement of the platform assembly.

In one embodiment, the accommodation cavity is connected to a pressure relief valve, and the pressure relief operation includes: controlling the pressure relief valve to release pressure from the accommodation cavity; and/or, the pressure relief operation includes: releasing the pressure in the accommodation cavity to match the ambient air pressure.

In the embodiment, when the inflation operation pressurizes the accommodation cavity, forming a driving force on the forming platform, the forming platform moves away from the light-transmitting assembly to stir the printing material, the forming cavity enlarges, and printing material flows into the forming cavity. Due to the pressurization of the accommodation cavity, the printing material can flow faster, achieving a rapid and uniform stirring effect. By controlling the pressure relief valve to release pressure from the accommodation cavity, the pressure relief valve connects the accommodation cavity to the atmosphere, making the air pressure in the accommodation cavity consistent with atmospheric pressure. After pressure relief, the platform assembly can move towards the light-transmitting assembly for stirring with less resistance, the forming cavity shrinks, and the printing material flows out of the forming cavity. Due to the squeezing of the forming cavity by the forming platform, the printing material in the forming cavity can flow out faster, achieving a rapid and uniform stirring effect. Repeating these operations achieves rapid and uniform stirring of the printing material.

In one embodiment, step 401 can specifically include: driving the platform assembly to repeatedly perform the movement away from the light-transmitting assembly and the movement towards the light-transmitting assembly.

In the embodiment, by driving the platform assembly to repeatedly perform a reciprocating motion away from and towards the light-transmitting assembly, each movement away from the light-transmitting assembly generates an upward negative pressure vortex, causing settled particles to float and diffuse; each movement towards the light-transmitting assembly generates a downward squeezing shear force, breaking up resin agglomerates. Repeated cycles for performing the reciprocating motion create a turbulent flow superposition effect, achieving automated stirring of the printing material.

In one embodiment, the method further includes: obtaining stirring parameters; and alternately performing the inflation operation and the pressure relief operation on the accommodation cavity according to the stirring parameters; wherein the stirring parameters include at least one of the following: inflation parameters, pressure relief parameters.

In the embodiment, the stirring parameters include but are not limited to inflation parameters and pressure relief parameters. Wherein, the inflation parameters include inflating to a first preset pressure. The first preset pressure can be greater than the ambient pressure, creating a pressure difference between the inside and outside of the accommodation cavity, with the internal pressure of the accommodation cavity being greater than the external pressure. The pressure relief parameters can include releasing pressure from the accommodation cavity to a second preset pressure. The second preset pressure can be equal to the external ambient pressure or greater than the ambient pressure.

In one embodiment, the method further includes: obtaining the stirring parameters; and driving the platform assembly to reciprocate according to the stirring parameters; wherein the stirring parameters include at least one of the following: target position parameters for the movement of the platform assembly, speed parameters for the movement of the platform assembly, stirring time, stirring count.

In the embodiment, the stirring parameters can also include one or more of the target position parameters, speed parameters, stirring time, and stirring count of the platform assembly's movement. For example, the stirring parameters can include the lifting distance of the platform assembly (upper limit and lower limit), lifting speed (motor speed, air pump power, etc.), stirring time/stirring count, etc., to achieve precise control of the stirring process.

In one embodiment, the stirring count ranges from 1 to 15 times. By accurately configuring the stirring count, over-stirring that could damage the printing material structure can be avoided, device wear can be reduced, and good stirring effectiveness can be ensured. For example, the stirring count can be 1 time, i.e., moving up once and then down once; the stirring count can be 15 times, i.e., moving up 15 times and then down 15 times; the stirring count can also be 3 times, 5 times, etc.

In one embodiment, the stirring parameters are fixed parameters adapted to all printing materials; or, the stirring parameters are parameters adapted to different printing materials. The stirring parameters can be set according to actual needs. Uniform stirring parameters can be set for all printing materials to save operational costs. Alternatively, corresponding stirring parameters can be configured for different printing materials to achieve personalized stirring.

In one embodiment, parameters of the printing material are obtained, and the stirring parameters are determined based on the parameters of the printing material.

In the embodiment, the parameters of the printing material used for the printing can first be determined, such as the type of printing material, precautions, usage instructions, etc. Then, appropriate stirring parameters are determined based on the actual situation of the printing material to ensure the standardization of the stirring process. Usually, the stirring parameters corresponding to various printing materials are preset. It is only necessary to obtain information characterizing the printing material category, such as the name or number of the printing material, to determine the corresponding stirring parameters.

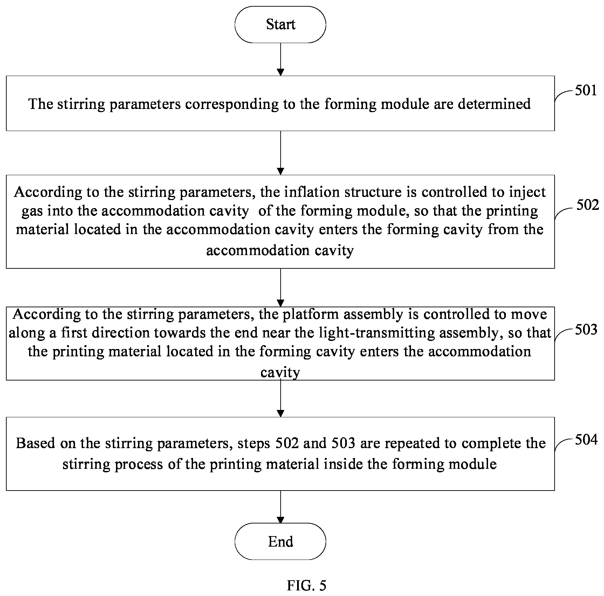

Please refer to FIG. 5, which illustrates a printing material uniformity adjustment method of an embodiment of the present application. The method can be executed by the electronic device 1 shown in FIG. 1 and can be applied to the application scenario shown in FIGS 2-3B to achieve automated, efficient, and uniform stirring of the photocurable printing material through precise control of the synergistic effect of air injection and platform assembly movement, reducing human intervention and improving operational convenience. The embodiment takes the printing device as the execution terminal. The method includes the following steps.

Step 501: the stirring parameters corresponding to the forming module 100 are determined.

In the step, different printing materials may correspond to different stirring parameters. Based on the viscosity of the printing material, corresponding stirring parameters can include stirring time and/or stirring repetitions. For example, higher viscosity printing materials correspond to longer stirring time or more stirring repetitions, while lower viscosity printing materials correspond to shorter stirring time or fewer stirring repetitions, to ensure that the stirring parameters can achieve stirring efficiently. Of course, the stirring parameters can also be the same. Typically, certain printing materials with the same stirring parameters are set. For example, the printing materials with the same or similar physical or chemical properties can also be configured with the same stirring parameters.

The stirring parameters adapted to the forming module 100 can be pre-configured according to the category parameters of the printing material contained in the forming module 100, and category identifier of the printing material can be set on the forming module 100. Before stirring, the identifier information of the forming module 100 is first identified, and then the stirring parameters corresponding to the printing material are determined. For example, taking the printing material being resin liquid as an example, the category and other information of the resin liquid are preset in a QR code, and the QR code is set on the forming module 100. Before using a new forming module 100, the QR code needs to be aligned with the camera of the printing device for recognition. The printing device will recognize the model of the resin liquid inside the forming module 100, as well as various information such as the usage count of the forming module 100, through the QR code information. After recognizing the model of the resin liquid inside the forming module 100, the stirring parameters corresponding to the forming module 100 can be found from the preset relationship between the resin liquid models and the stirring parameters. Of course, the identifier information can also be readable tags such as Near Field Communication (NFC) or Radio Frequency Identification (RFID), preferably rewritable tags. It should be noted that if real-time information needs to be managed and updated, such as the usage count of the forming module 100, rewritable tags need to be set.

Optionally, the category identifier can only contain the identity information of the forming module, such as the identity sequence of the forming module; the category identifier can also contain specific information, such as the model of the forming module, usage count, etc.; the category identifier can also be specific stirring parameters, printing parameters, etc. If the category identifier is the identity sequence or model information of the forming module, the printing device can match category identifier with the database stored in the printing device based on this identity sequence or model information, and then obtain the corresponding parameter information. Alternatively, the printing device can connect to the network and obtain parameter information matching the category identifier from a cloud server. It can be seen that the stirring parameters, printing parameters, etc., can be directly set in the identifier information and obtained through direct recognition; or the basic information of the printing material, such as name, number, etc., can be obtained through recognition, and determined by matching with a corresponding database.

Step 502: according to the stirring parameters, the inflation structure 300 is controlled to inject gas into the accommodation cavity 124 of the forming module 100, so that the printing material located in the accommodation cavity 124 enters the forming cavity 140 from the accommodation cavity 124.

In the step, the stirring parameters corresponding to the forming module 100 provide a quantitative basis for subsequent stirring operations. By controlling the inflation structure 300 of the printing device to inject gas into the accommodation cavity 124 of the forming module 100, and as the accommodation cavity 124 communicates with the forming cavity 140, the pressure difference generated by the gas injected by the inflation structure 300 forces the printing material to form directional flow between the accommodation cavity 124 and the forming cavity 140. That is, the printing material flows from the accommodation cavity 124 into the forming cavity 140 under the pressure of the injected gas.

Step 503: according to the stirring parameters, the platform assembly 120 is controlled to move along a first direction towards the end near the light-transmitting assembly 111, so that the printing material located in the forming cavity 140 enters the accommodation cavity 124.

In the step, the first direction can refer to an axial direction of the forming module 100. During the process of the platform assembly 120 moving along the first direction closer to the light-transmitting assembly 111, the capacity of the forming cavity 140 becomes progressively smaller, forcing the printing material located in the forming cavity 140 to enter the accommodation cavity 124, causing the printing material to exchange between the accommodation cavity 124 and the forming cavity 140. The above interaction process breaks the static stratification of the printing material caused by viscosity, effectively eliminating bubbles and agglomeration.

Step 504: based on the stirring parameters, steps 502 and 503 are repeated to complete the stirring process of the printing material inside the forming module 100.

In the step, repeating the operations of steps 502 to 503 above can construct periodic bidirectional convection of the printing material between the accommodation cavity 124 and the forming cavity 140, causing the printing material to cyclically exchange between the accommodation cavity 124 and the forming cavity 140. The cyclic interaction breaks the static stratification of the printing material caused by viscosity, not only effectively eliminating bubbles and agglomeration but also avoiding printing material denaturation caused by over-stirring through parameterized control. Thus, through precise control of the synergistic effect of air injection and platform assembly 120 movement, automated, efficient, and uniform stirring of the photocurable printing material is achieved, reducing human intervention and improving operational convenience.

In one embodiment, the stirring parameters include inflation pressure parameters. The step 502 can specifically include: controlling the inflation structure 300 to inject gas into the accommodation cavity 124 of the forming module 100 according to the inflation pressure parameters, so that the printing material located in the accommodation cavity 124 enters the forming cavity 140 from the accommodation cavity 124. The platform assembly 120 moves a preset distance along the first direction away from the light-transmitting assembly 111 under the pressure of the printing material in the forming cavity 140 during the inflation process.

In the embodiment, the inflation pressure parameters are used to control the gas pressure inside the accommodation cavity 124. Controlling the inflation structure 300 to inject gas according to the inflation pressure parameters can precisely adjust the gas pressure, thereby controlling the flow rate and impact force of the printing material entering the forming cavity 140 from the accommodation cavity 124, avoiding poor material flow due to insufficient pressure or splashing caused by excessive pressure. Since the printing material from the accommodation cavity 124 flows into the forming cavity 140, the printing material will lift the platform assembly 120, thereby causing the platform assembly 120 to move away from the light-transmitting assembly 111 along the first direction. Therefore, controlling the inflow speed of the printing material from the accommodation cavity 124 into the forming cavity 140 indirectly controls the speed at which the platform assembly 120 moves away from the light-transmitting assembly 111 along the first direction, ensuring the platform assembly 120 moves within a safe speed range for safe stirring.

On the other hand, the platform assembly 120 moves the preset distance in the reverse direction along the first direction under the action of inflation pressure. The mechanical displacement compensates for the squeezing effect of gas pressure on the material in the forming cavity, maintaining pressure balance inside the cavity while utilizing the synergistic effect of gas pressure and platform assembly 120 movement to form bidirectional material circulation. That is, when gas pushes the printing material into the forming cavity, the reverse movement of the platform creates space for the printing material and guides the uniform distribution of the printing material, effectively solving the problem of uneven stirring caused by material viscosity in photocurable printing. Thus, through closed-loop control of pressure parameters and mechanical displacement, low-disturbance stirring of high-viscosity printing material is achieved, significantly improving material mixing uniformity.

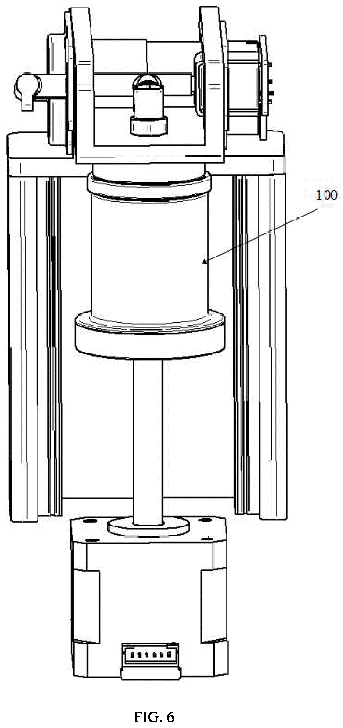

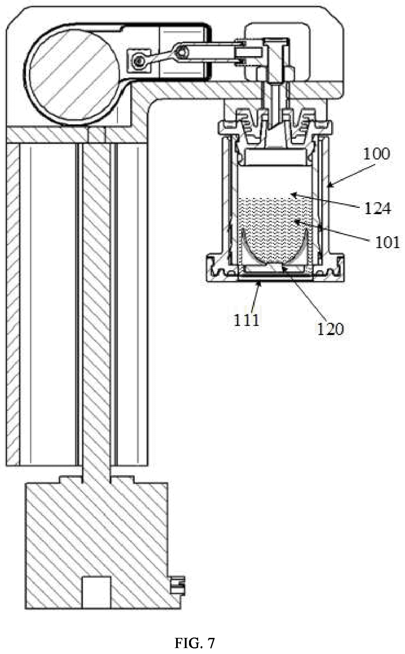

As shown in FIG. 6, which is a front view of a printing device before stirring provided by an embodiment of the present application. FIG. 7 is a cross-sectional view of a printing device before stirring provided by an embodiment of the present application. Before stirring starts, the resin liquid is contained in the accommodation cavity 124 of the forming module 100, and the platform assembly 120 is close to the light-transmitting assembly 111 at this time.

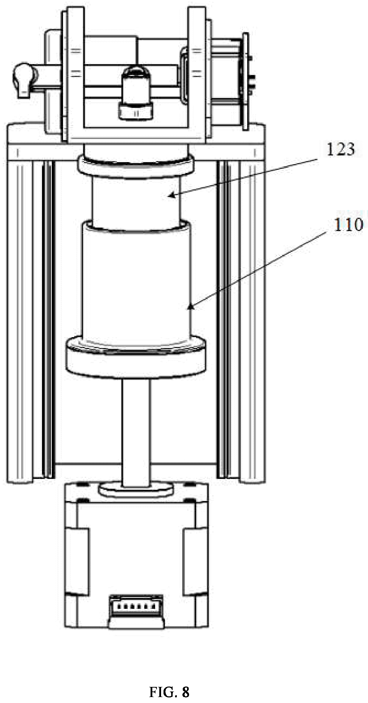

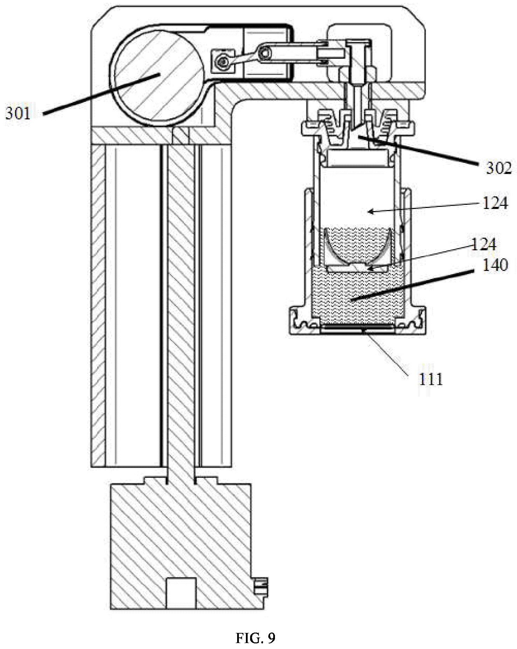

As shown in FIG. 8, which is a front view of a printing device during stirring provided by an embodiment of the present application. FIG. 9 is a cross-sectional view of a printing device during stirring provided by an embodiment of the present application. During the stirring process, the inflation structure 300 generates gas through the air pump 301 and injects gas into the accommodation cavity 124 of the forming module 100 through the air outlet 302, forcing the resin liquid in the accommodation cavity 124 to enter the forming cavity 140. The resin liquid in the forming cavity 140 lifts the platform assembly 120, forcing the platform assembly 120 to move away from the light-transmitting assembly 111 along the first direction.

In one embodiment, the inflation pressure parameters include a pressure lower limit value and a pressure upper limit value. Controlling the inflation structure 300 to inject gas into the accommodation cavity 124 of the forming module 100 according to the inflation pressure parameters includes: controlling the inflation structure 300 to start injecting gas into the accommodation cavity 124 according to the pressure lower limit value, and gradually increasing the inflation pressure value during the inflation process until the inflation pressure value reaches the pressure upper limit value.

In the embodiment, starting inflation from the lower pressure lower limit value can initiate printing material flow with a gentle initial pressure, avoiding splashing or bubble entrainment of high-viscosity printing material due to a sudden pressure increase. Gradually increasing the pressure value during the inflation process forms a progressive pressurization curve, causing the process of printing material entering the forming cavity 140 from the accommodation cavity 124 to exhibit accelerated flow. This dynamic pressure gradient not only effectively overcomes the viscous resistance of the material in the flow channel but can also gradually break up the agglomeration structure inside the printing material. The pressure upper limit value limits the maximum flow rate of the printing material, thereby avoiding problems such as material splashing caused by excessive flow rates. By setting the inflation pressure parameters as an interval range including the pressure lower limit value and the pressure upper limit value, and adopting a stepped control strategy of starting inflation from the pressure lower limit value and gradually increasing to the pressure upper limit value, fine-tuned control of the printing material flow state is achieved. The pressure interval control scheme of the embodiment, by simulating the fluid dynamics principle of "gentle first, then rapid", achieves a smooth transition of photocurable material from laminar flow to turbulent flow while avoiding initial impact disturbances and maximizing end-stage stirring efficiency, significantly improving material uniformity and bubble removal effectiveness.

Optionally, the pressure lower limit value can be 0 kpa, and the pressure upper limit value can be 50 kpa. Here, the pressure value refers to gauge pressure. When the lower pressure value of the gauge pressure is 0 kpa, the gauge pressure is equal to the external ambient air pressure. The progressive pressurization curve formed by gradually increasing the pressure value during the inflation process can be linear or nonlinear, and can be selected according to actual needs.

In one embodiment, the printing device further includes a limiting mechanism, the limiting mechanism includes a limiting part movable along the first direction. Optionally, the printing device further includes a limiting mechanism, the limiting mechanism includes a limiting part movable along the first direction. In one embodiment, the printing device further includes a limiting mechanism, the limiting mechanism includes a limiting part movable along the first direction, and the platform assembly 120 is drivingly connected to the limiting part, used for limiting the movement distance of the platform assembly 120 in the first direction. The stirring parameters also include a first speed of the limiting part. Step 502 can also specifically include: controlling the limiting part to move along the first direction away from the light-transmitting assembly 111 according to the first speed; controlling the inflation structure 300 to inject gas into the accommodation cavity 124 of the forming module 100 according to the inflation pressure parameters; the inflation pressure parameters cause the platform assembly 120 to move along the first direction away from the light-transmitting assembly 111 at a second speed during the inflation process, and the second speed is greater than or equal to the first speed.

In the embodiment, the printing device can also include a limiting mechanism, and the platform assembly 120 is drivingly connected to the limiting part. The limiting mechanism is used to limit the movement distance of the platform assembly 120 in the first direction. The limiting part can move at the first speed along the first direction, providing a reference benchmark for the movement of the platform assembly 120 (at the second speed) through mechanical limitation, ensuring the platform assembly 120 always moves within a controllable range during the inflation process. During the process of the platform assembly 120 moving away from the light-transmitting assembly 111 along the first direction due to the squeezing of the printing material in the forming cavity, the limiting part also moves away from the light-transmitting assembly 111 along the first direction, avoiding damage to the forming module 100 by the limiting part. In above process, the second speed of the platform assembly 120 movement is greater than or equal to the first speed of the limiting part, ensuring on one hand that the forming module 100 is not crushed, and on the other hand that the top cover 122 of the platform assembly 120 always stays in contact with the limiting part, ensuring safe movement of the forming module 100. By dynamically adjusting the coupling relationship between gas pressure and mechanical displacement, while ensuring sufficient material flow, vibration or material splashing caused by speed mismatch during the stirring process is significantly reduced.

In one embodiment, step 503 can specifically include: when detecting that the platform assembly 120 has moved a preset distance along the first direction away from the light-transmitting assembly 111, according to the stirring parameters, controlling the limiting part to drive the platform assembly 120 to move along the first direction towards the end near the light-transmitting assembly 111 to a target position, so that the printing material located in the forming cavity 140 enters the accommodation cavity 124.

In the embodiment, during the stirring process, the movement distance of the platform assembly 120 can be detected periodically or in real time. When it is detected that the movement distance of the platform assembly 120 away from the light-transmitting assembly 111 reaches the preset distance, the limiting part is controlled to drive the platform assembly 120 to move in the opposite direction, thereby ensuring the flow process of the printing material from the accommodation cavity 124 into the forming cavity 140 is fully completed, avoiding the problem of insufficient printing material flow caused by switching the movement direction of the platform assembly 120 too early. By the limiting part driving the platform assembly 120 towards the light-transmitting assembly 111 to the target position according to the stirring parameters, the setting of the target position can ensure that the platform assembly 120 does not crush the light-transmitting assembly 111, achieving safety in the reverse flow process through active mechanical traction control. The above dual-mode control of "passive response to inflation pushing, active execution of limitation traction" utilizes gas pressure to achieve uniform diffusion of forward flow of printing material, while ensuring the safety of reverse flow of printing material through mechanical traction. The uniformity and efficiency of printing material stirring are significantly improved, while reducing energy loss and device wear.

In one embodiment, the method further includes: when detecting that the platform assembly 120 has moved the preset distance along the first direction away from the light-transmitting assembly 111, controlling the inflation structure 300 to stop injecting gas into the accommodation cavity 124, and/or opening the pressure relief valve of the forming module 100.

In the embodiment, when detecting that the platform assembly 120 movement has reached the preset distance, controlling the inflation structure 300 to stop inflation, through linkage control of displacement parameters and inflation operations, precisely matches printing material flow requirements with energy input, avoiding both material splashing or energy waste caused by over-inflation and pressure accumulation risks caused by continuous inflation.

Optionally, the pressure relief valve can be selectively opened to relieve pressure inside the accommodation cavity 124. Through the active pressure release channel, the pressure difference between the accommodation cavity 124 and the external environment can be quickly balanced, effectively eliminating the impact of residual pressure on the stability of the inner cylinder body 123 of the forming module 100 and the printing material. While ensuring safe operation of the device, the stirring efficiency of high-viscosity photocurable materials is significantly improved.

In one embodiment, the stirring parameters include a preset repetition count for the stirring process and/or a total stirring time. The step 504 can specifically include: the stirring parameters include a preset repetition count for the stirring process and/or a total stirring time. Repeating the inflation step and the movement step based on the stirring parameters to complete the stirring process of the printing material inside the forming module 100 includes: executing the inflation step and the movement step according to the preset repetition count and/or the total stirring time to complete the stirring process of the printing material inside the forming module 100.

In the embodiment, appropriate stirring counts or stirring times can be set according to the performance of different categories of printing materials, achieving diversified stirring strategies and ensuring the stability of printing results. The stirring count refers to the repetition count of steps 502 and 503 in each stirring process. Higher viscosity printing materials can have a larger preset repetition count. The stirring time refers to the total duration required for each stirring process. Higher viscosity printing materials can have a longer total stirring time, for example, the total stirring time for high-viscosity resin liquid can be 1 minute, and the total stirring time for low-viscosity resin liquid can be 30 seconds.

During the stirring process, stirring is performed according to the preset count and/or time. By executing steps 502-503 according to the adapted preset repetition count, it is ensured that the printing material undergoes a complete bidirectional flow cycle, so that each batch of stirring can achieve the same mixing intensity, effectively eliminating process fluctuations caused by subjective judgment of operators. Control of the total stirring time ensures the sufficiency of the stirring process from a time dimension, avoiding insufficient material uniformity due to premature termination or performance degradation of the material caused by over-stirring.

Optionally, the two parameters, the preset repetition count and total stirring time, can be used independently or in combination. When used simultaneously, the two parameters form a "cycle count-time" dual insurance mechanism, which can prevent insufficient mixing that may occur when relying solely on the count parameter in case of changes in printing material viscosity, and can also avoid process deviations caused by relying solely on the time parameter when the device operating speed fluctuates, improving the consistency of the printing material state. In one embodiment, the printing device includes a forming module and a driving component; the forming module includes an outer cylinder and a platform assembly; the platform assembly is drivingly connected to the driving component. The step 401 can specifically include: when the forming module is installed at a printing station and the platform assembly is connected to the driving component, controlling the driving component to drive the platform assembly to move back and forth along the first direction inside the outer cylinder of the forming module so as to stir the printing material inside the forming module.

In the embodiment, the driving component can drive the platform assembly to move along the first direction, thereby stirring the printing material through mechanical driving of the platform assembly's movement.

Optionally, the limiting mechanism of the printing platform can include a driving component, and the platform assembly can be drivingly connected to the driving component through the limiting part, so that the driving component drives the platform assembly to move back and forth along the first direction through the limiting part.

Optionally, the driving component can include a lead screw, a motor, and a slider. The motor is connected to the lead screw to drive the lead screw to rotate. The slider is threadedly connected to the lead screw. The slider is fixedly connected to the frame of the printing device; the motor and the limiting part move only relative to the frame in the first direction, so that when the motor starts, the motor and the lead screw together move relative to the slider along the first direction. The motor precisely controls the movement position or distance of the limiting part, thereby precisely controlling the movement position or distance of the platform assembly.

In the above method, before the printing device starts printing, the stirring process of the printing material is performed first. First, the forming module 100 containing the printing material is placed on the printing device. The air pump 301 of the inflation structure 300 built into the printing device will pressurize, transmitting pressure to the inside of the accommodation cavity 124 through the air outlet 302 of the inflation structure 300. Due to the pressure, the resin in the accommodation cavity 124 will enter the forming cavity 140, and simultaneously the platform assembly 120 will also move along the first direction (e.g., a Z-axis direction) away from the light-transmitting assembly 111. When it is detected that the platform assembly 120 has moved a preset distance, the inflation pressure can be turned off or maintained. Since a Z-axis motor of the limiting mechanism drives the limiting part to press the platform assembly 120 to the target position inside the outer cylinder 110, the resin in the forming cavity 140 will flow back into the accommodation cavity 124. Such reciprocating motion achieves automatic stirring of the resin inside the accommodation cavity 124. The entire process does not require manual stirring, improving the efficiency and user experience of the printing device.

After the printing material is stirred, the printing process can directly start, controlling the forming platform to perform corresponding movements based on the printing program to form printed objects.

Optionally, the light-transmitting assembly 111 includes a FEP film. Of course, the light-transmitting assembly 111 can also be a rigid component. Under the action of pneumatic pressure, the platform assembly moves upward. Wherein, due to the pressure difference between the inside and outside of the accommodation cavity, the platform assembly is subjected to a force away from the light-transmitting assembly (i.e., upward force), and the FEP film is subjected to a force away from the platform assembly (i.e., downward force), making it easier for the forming platform to separate from the FEP film. Therefore, the platform assembly can separate from the FEP film by moving a shorter distance, improving printing efficiency.

Optionally, printing is performed layer by layer. After each layer is printed, the platform assembly moves upward a certain distance, creating a certain space below the forming platform. After the printing material flows to fill the space, the next layer can be printed. Inflating the accommodation cavity makes it easier and faster for the printing material with a certain viscosity to fill the empty area below the platform assembly, reducing the interval time between each layer of printing and improving printing efficiency.

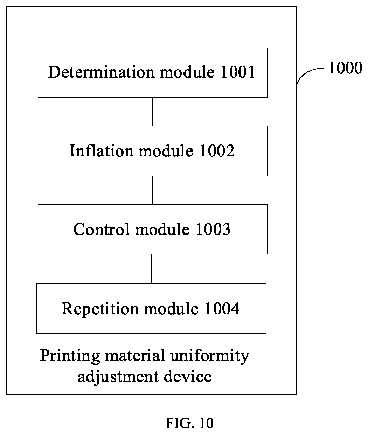

An embodiment of the present application provides a printing material uniformity adjustment device, applied to a printing device. The printing device is equipped with a forming module, and the forming module includes a platform assembly. The device includes a stirring module, used for driving the platform assembly to move so as to stir the printing material. Please refer to FIG. 10, which illustrates a printing material uniformity adjustment device 1000 of an embodiment of the present application. The device can be applied to the electronic device 1 shown in FIG. 1 and can be applied to the application scenario shown in FIGS 2-3B to achieve automated, efficient, and uniform stirring of the photocurable printing material without requiring an extra stirring component, reducing product cost, minimizing human intervention, and improving operational convenience, through precise control of the platform assembly's movement. The device can be applied to the aforementioned printing device. The device includes a determination module 1001, an inflation module 1002, a control module 1003, and a repetition module 1004. The functional principles of each module are as follows.

The determination module 1001 is used to determine the stirring parameters corresponding to the forming module.

The inflation module 1002 is used to execute an inflation step, including: according to the stirring parameters, controlling the inflation structure to inject gas into the accommodation cavity of the forming module, so that the printing material located in the accommodation cavity enters the forming cavity from the accommodation cavity.

The control module 1003 is used to execute a movement step, including: according to the stirring parameters, controlling the platform assembly to move along the first direction towards an end near the light-transmitting assembly, so that the printing material located in the forming cavity enters the accommodation cavity.

The repetition module 1004 is used to repeat the inflation step and the movement step based on the stirring parameters to complete the stirring process of the printing material inside the forming module.

In one embodiment, the stirring parameters include inflation pressure parameters. The inflation module 1002 is specifically used to, according to the inflation pressure parameters, control the inflation structure to inject gas into the accommodation cavity of the forming module, so that the printing material located in the accommodation cavity enters the forming cavity from the accommodation cavity. The platform assembly moves a preset distance along the first direction away from the light-transmitting assembly under the pressure of the printing material in the forming cavity during the inflation process.

In one embodiment, the inflation pressure parameters include a pressure lower limit value and a pressure upper limit value. The inflation module 1002 is also specifically used to control the inflation structure to start injecting gas into the accommodation cavity according to the pressure lower limit value, and gradually increase the inflation pressure value during the inflation process until the inflation pressure value reaches the pressure upper limit value.

In one embodiment, the printing device further includes a limiting mechanism. The limiting mechanism includes a limiting part movable along the first direction. The platform assembly is drivingly connected to the limiting part, used for limiting the movement distance of the platform assembly in the first direction. The stirring parameters also include a first speed for the limiting part. The inflation module 1002 is specifically used for controlling the limiting part to move along the first direction away from the light-transmitting assembly according to the first speed; according to the inflation pressure parameters, controlling the inflation structure to inject gas into the accommodation cavity of the forming module; the inflation pressure parameters cause the platform assembly to move along the first direction away from the light-transmitting assembly at a second speed during the inflation process, and the second speed is greater than or equal to the first speed.

In one embodiment, the control module 1003 is specifically used to, when detecting that the platform assembly has moved the preset distance along the first direction away from the light-transmitting assembly, according to the stirring parameters, control the limiting part to drive the platform assembly to move along the first direction towards the end near the light-transmitting assembly to a target position, so that the printing material located in the forming cavity enters the accommodation cavity.

In one embodiment, the device further includes a stop module. The stop module is used to, when detecting that the platform assembly has moved a preset distance along the first direction away from the light-transmitting assembly, control the inflation structure to stop injecting gas into the accommodation cavity. In one embodiment, the device further includes an opening module. The opening module is used to, when detecting that the platform assembly has moved a preset distance along the first direction away from the light-transmitting assembly, open the pressure relief valve of the forming module.

In one embodiment, the stirring parameters include a preset repetition count for the stirring process and/or a total stirring time. The repetition module 1004 is configured for executing the inflation step and the movement step according to the preset repetition count and/or the total stirring time to complete the stirring process of the printing material inside the forming module.

In one embodiment, the printing device includes a forming module and a driving component; the forming module includes an outer cylinder and a platform assembly; the platform assembly is drivingly connected to the driving component.

The device further includes: a driving module, used for, when the forming module is installed at a printing station and the platform assembly is connected to the driving component, controlling the driving component to drive the platform assembly to move back and forth along the first direction inside the outer cylinder of the forming module so as to stir the printing material inside the forming module.

The detailed description of the above printing material uniformity adjustment device 1000, please refer to the description of related method steps in the above embodiments. The implementation principle and technical effects of the device are similar with that of the related method steps, and will not be repeated in the embodiment.

An embodiment of the present application also provides a computer-readable storage medium storing computer-executable instructions. When the instructions are executed by a processor, the method according to any of the preceding embodiments is implemented.

An embodiment of the present application also provides a computer program product, including a computer program. When the computer program is executed by a processor, the method according to any of the preceding embodiments is implemented.

In the several embodiments provided in the present application, it should be understood that the disclosed device and method can be implemented in other ways. For example, the device embodiments described above are merely illustrative. For example, the division of modules is only a logical function division. In actual implementation, there may be other division methods. For example, multiple modules may be combined or integrated into another system, or some features may be ignored or not executed.

The integrated modules implemented in the form of software functional modules can be stored in a computer-readable storage medium. The software functional modules are stored in a storage medium, including several instructions to enable a computer device (which can be a personal computer, server, network device, etc.) or processor to execute part of the steps of the methods in the various embodiments of the present application.

It should be understood that the aforementioned processor can be a Central Processing Unit (CPU), or the processor can be other general-purpose processors, Digital Signal Processors (DSP), Application Specific Integrated Circuits (ASIC), etc. A general-purpose processor can be a microprocessor, or the processor can also be any conventional processor. The steps of the method disclosed in the present application in combination with the embodiments can be directly embodied as being executed and completed by a hardware processor, or executed and completed by a combination of hardware and software modules in the processor. The memory may include high-speed RAM memory, and may also include non-volatile storage (NVM), such as at least one disk storage device, and can also be a U disk, mobile hard disk, read-only memory, magnetic disk, optical disk, etc.

The aforementioned storage medium can be implemented by any type of volatile or non-volatile storage device or a combination thereof, such as Static Random-Access Memory (SRAM), Electrically Erasable Programmable Read-Only Memory (EEPROM), Erasable Programmable Read-Only Memory (EPROM), Programmable read-only memory (PROM), Read-Only Memory (ROM), magnetic memory, flash memory, magnetic disk, or optical disk. A storage medium can be any available medium that can be accessed by a general-purpose or special-purpose computer.

An exemplary storage medium is coupled to the processor, enabling the processor to read information from and write information to the storage medium. Of course, the storage medium can also be an integral part of the processor. The processor and the storage medium can be located in an Application Specific Integrated Circuit (ASIC). Of course, the processor and the storage medium can also exist as discrete components in an electronic device or a main control device.

It should be noted that in the present document, the terms "comprising", "including" or any other variation thereof are intended to cover non-exclusive inclusion, so that a process, method, article, or device that includes a series of elements includes not only those elements but also other elements not explicitly listed, or also includes elements inherent to such process, method, article, or device. Without further limitation, an element defined by the phrase "comprising a ......" does not exclude the presence of additional identical elements in the process, method, article, or device that includes the element.

The serial numbers of the above embodiments of the present application are for description only and do not represent the superiority or inferiority of the embodiments.

Through the description of the above implementation manners, those skilled in the art can clearly understand that the above embodiment methods can be implemented by means of software plus a necessary general hardware platform. Of course, the former is a better implementation in many cases. Based on this understanding, the essential part of the technical solution of the present application or the part contributing to the prior art can be embodied in the form of a software product. The computer software product is stored in a storage medium (such as ROM/RAM, magnetic disk, optical disk), including several instructions to enable a terminal device (which can be a mobile phone, computer, server, air conditioner, or network device, etc.) to execute the methods of the various embodiments of the present application.

In the technical solution of the present application, the collection, storage, use, processing, transmission, provision, and disclosure of user data and other information involved are all in compliance with the provisions of relevant laws and regulations.

The above are only preferred embodiments of the present application and are not intended to limit the patent scope of the present application. Any equivalent structure or equivalent process transformation made using the content of the description and drawings of the present application, or directly or indirectly applied in other related technical fields, shall be similarly included in the patent protection scope of the present application.

## Claims

1. A printing material uniformity adjustment method, **characterized in that** the method is applied to a printing device equipped with a forming module (100), the forming module (100) comprises a platform assembly (120), and the method comprises:
driving the platform assembly (120) to move so as to stir printing material.

2. The method according to claim 1, **characterized in that** the forming module (100) forms an accommodation cavity (124) which is sealed, the forming module (100) comprises a light-transmitting assembly (111) disposed on one side of the accommodation cavity (124), the platform assembly (120) comprises a forming platform (121) arranged opposite the light-transmitting assembly (111), the accommodation cavity (124) is configured for accommodating the printing material, the forming platform (121) is capable of moving towards or away from the light-transmitting assembly (111), and the method comprises:
alternately performing an inflation operation and a pressure relief operation on the accommodation cavity (124).

3. The method according to claim 2, **characterized in that** the method further comprises:
driving the platform assembly (120) to move away from the light-transmitting assembly (111) and inflating the accommodation cavity (124); and
driving the platform assembly (120) to move towards the light-transmitting assembly (111) and relieving pressure in the accommodation cavity (124).

4. The method according to claim 2, **characterized in that** the printing device comprises a limiting mechanism, the limiting mechanism comprises a driving component and a limiting part, the limiting part is in contact and cooperation with the platform assembly (120), and driving the platform assembly (120) to move away from the light-transmitting assembly (111) comprises:
driving the platform assembly(120) to move away from the light-transmitting assembly (111) by a pneumatic driving mode, comprising: controlling air pressure in the accommodation cavity (124) to increase, making the air pressure in the accommodation cavity (124) higher than ambient air pressure, forming a driving force on the platform assembly (120) away from the light-transmitting assembly (111) and controlling the driving component to cause the limiting part to move away from the light-transmitting assembly (111).

5. The method according to claim 2, **characterized in that** the printing device comprises a limiting mechanism, and the limiting mechanism comprises a driving component and a limiting part, the limiting part is fixedly connected to the platform assembly (120), and driving the platform assembly (120) to move away from the light-transmitting assembly (111) comprising any one of the following methods:
driving the platform assembly (120) to move away from the light-transmitting assembly (111) by a pneumatic driving mode, comprising: controlling air pressure in the accommodation cavity (124) to increase, making the air pressure in the accommodation cavity (124) higher than ambient air pressure, forming a driving force on the platform assembly (120) away from the light-transmitting assembly (111); and controlling the driving component to cause the limiting part to move away from the light-transmitting assembly (111);
driving the platform assembly (120) to move away from the light-transmitting assembly (111) by a mechanical and pneumatic combined driving mode, comprising: controlling the driving component to cause the limiting part to move away from the light-transmitting assembly (111), and driving the platform assembly (120) to move; controlling the air pressure in the accommodation cavity (124) to increase, and making the air pressure in the accommodation cavity (124) higher than the ambient air pressure, and forming a driving force on the platform assembly (120) away from the light-transmitting assembly (111);
driving the platform assembly (120) to move away from the light-transmitting assembly (111) by a mechanical driving mode, comprising: controlling the driving component to cause the limiting part to move away from the light-transmitting assembly (111), and driving the platform assembly (120) to move.

6. The method according to claim 2, **characterized in that** the accommodation cavity (124) is connected to a pressure relief valve, and performing the pressure relief operation comprises:
controlling the pressure relief valve to release pressure from the accommodation cavity (124); and/or
releasing the pressure in the accommodation cavity (124) to match ambient air pressure.

7. The method according to claim 2, **characterized in that** driving the platform assembly (120) to move so as to stir printing material comprises:
driving the platform assembly (120) to repeatedly perform a movement away from the light-transmitting assembly (111) and a movement towards the light-transmitting assembly (111).

8. The method according to claim 2, **characterized in that** the method further comprises:
obtaining stirring parameters; and alternately performing the inflation operation and the pressure relief operation on the accommodation cavity (124) according to the stirring parameters, wherein the stirring parameters comprise at least one of inflation parameters, pressure relief parameters.

9. The method according to claim 1, **characterized in that** the method further comprises:
obtaining stirring parameters; and driving the platform assembly (120) to reciprocate according to the stirring parameters, wherein the stirring parameters comprise at least one of target position parameters for a movement of the platform assembly (120), speed parameters for the movement of the platform assembly (120), stirring time, stirring count.

10. The method according to claim 4, **characterized in that** the limiting part is equipped with an inflation structure, the inflation structure communicates with the accommodation cavity (124) when the limiting part and the platform assembly (120) are in contact and cooperation, and the method comprises:
synchronizing a movement speed of the limiting part with a movement speed of the platform assembly (120).

11. A printing device, **characterized in that** the device comprises:
a forming module (100) comprising a platform assembly (120), the platform assembly (120) is configured for stirring printing material by moving.

12. The printing device according to claim 11, **characterized in that** the forming module (100) forms an accommodation cavity (124) which is sealed, the forming module (100) comprises a light-transmitting assembly (111) disposed on one side of the accommodation cavity (124), the platform assembly (120) comprises a forming platform (121) arranged opposite the light-transmitting assembly (111), the accommodation cavity (124) is configured for accommodating the printing material, and the forming platform (121) is capable of moving towards or away from the light-transmitting assembly (111).

13. The printing device according to claim 12, **characterized in that** the printing device comprises a limiting mechanism, and the limiting mechanism comprises a driving component and a limiting part, and the limiting part is in contact and cooperation with the platform assembly (120), or the limiting part is fixedly connected to the platform assembly (120).

14. The printing device according to claim 13, **characterized in that** the limiting part is equipped with an inflation structure, and the inflation structure communicates with the accommodation cavity (124) when the limiting part and the platform assembly (120) are in contact and cooperation.

15. An electronic device, **characterized in that** the electronic device comprises:
at least one processor;
a memory coupled to the at least one processor;
wherein the memory stores instructions executable by the at least one processor, and the processor is configured to execute the instructions to implement a method of any one of claims 1 to 10.
